**Europäisches Patentamt**

(19) **European Patent Office**

**Office européen des brevets**

(11) Veröffentlichungsnummer: **0 006 251**
**B1**

(12) **EUROPÄISCHE PATENTSCHRIFT**

(45) Veröffentlichungstag der Patentschrift:
**12.05.82**

(51) Int. Cl.³: **G 03 B 27/04**

(21) Anmeldenummer: **79200217.2**

(22) Anmeldetag: **18.04.79**

(54) **Vorrichtung zum Duplizieren von Mikrofilmen.**

(30) Priorität: **24.04.78 DE 2817824**

(43) Veröffentlichungstag der Anmeldung:
**09.01.80 Patentblatt 80/1**

(45) Bekanntmachung des Hinweises auf die Patenterteilung:
**12.05.82 Patentblatt 82/19**

(84) Benannte Vertragsstaaten:
**CH DE FR GB NL**

(56) Entgegenhaltungen:
**CH-A-251 414**
**DE-C-832 992**
**GB-A-828 531**
**US-A-4 032 234**

(73) Patentinhaber: **Haus, Hans, Jahnstrasse 7,**
**D-6250 Limburg (DE)**

(72) Erfinder: **Haus, Hans, Jahnstrasse 7, D-6250 Limburg**
**(DE)**

(74) Vertreter: **Hemmerich, Friedrich Werner et al,**
**Patentanwälte**
**HEMMERICH-MÜLLER-GROSSE-POLLMEIER Berliner**
**Allee 41, D-4000 Düsseldorf 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Vorrichtung zum Duplizieren von Mikrofilmen

Die Erfindung bezieht sich auf eine Vorrichtung zum Duplizieren von Mikrofilmen oder Mikrofilm-Jackets mit einer in der Mittenachse eines Glaszylinders angeordneten Lichtröhre und einem um den Glaszylinder herumgeführten, spannbaren, das zu kopierende Original und die zu belichtende Filmfolie gemeinsam unter Andrücken an die Außenwandung des Glaszylinders in Belichtungslage und aus dieser heraus fördernden Förderband, bei der dieses um eine in Einführrichtung des Belichtungsgutes hinter dem Glaszylinder angeordnete Spannrolle und um je eine vor dem Glaszylinder angeordnete Antriebs- bzw. Umführungsrolle geführt ist.

Eine bekannte Vorrichtung dieser Art (CH-PS 251 414) ist für die Herstellung von Lichtpausen bestimmt; ihr konstruktiver Aufbau gestattete jedoch auch das Duplizieren von Mikrofilmen, insbesondere Mikrofilm-Jackets. Allerdings würde dann die Vorrichtung den Anforderungen nach einer hohen Arbeitsgeschwindigkeit, einfacher Bedienbarkeit, hoher Kopierqualität wegen des 40- und mehrfachen Verkleinerungsgrades und kleinen kompakten Bauweise z. B. für Tischgeräte nicht gerecht. Der große radiale Abstand zwischen der Lichtquelle und dem Kopierzylinder dieser bekannten Vorrichtung erfordert eine Lichtleistung, die mit einer Einzelröhre als Lichtquelle nur zu erreichen ist, wenn Röhren großer Lichtleistung verwendet werden, die aber neben der Hitzeentwicklung auch wegen der langen Anlaufzeiten nicht einfach ein- und ausgeschaltet werden können und deshalb die Installation aufwendiger zeitgesteuerter Blenden notwendig machen. Die Verwendung einer größeren Anzahl zu Gruppen zusammengefaßter Lichtröhren verbietet sich wegen der dabei nicht zu vermeidenden Überstrahlungswirkung der aufeinanderliegenden Flächen von Original und Belichtungsgut. Bei dem erwähnten Verkleinerungsmaßstab führte sie zu praktisch unbrauchbaren Kopierergebnissen. Ferner ist bei der bekannten Vorrichtung der Einführungsschlitz an einer anderen Stelle des Gerätes angeordnet als der Ausbringschlitz. Ein Umstand, der die leichte Bedienbarkeit der Vorrichtung als Pult- oder Tischgerät erheblich herabsetzt. Es ist bei Durchlauf des Belichtungsgutes in einer Richtung auch schwierig und praktisch nur mit zusätzlichen Steuereinrichtungen möglich, den Transport des Belichtungsgutes für die Zeit des Belichtens zu stoppen, um eine für das Duplizieren von Mikrofilmen geforderte punktgenaue Kopierqualität zu erreichen. Die Vorrichtung ist aus den schon erwähnten Gründen des großen Abstandes zwischen Lichtquelle und Zylinder, der erforderlichen Zusatzeinrichtungen wie Steuerung und Kühlung so groß, daß sich auch aus diesem Grunde die Abmaße eines Pult- oder Tischgerätes nicht erreichen lassen.

Der Erfindung liegt die Aufgabe zugrunde, die bekannte Vorrichtung so umzugestalten und zu verbessern, daß die geschilderten Nachteile und Schwierigkeiten vermieden bzw. beseitigt werden. Diese Aufgabe wird mit den im Kennzeichen des Anspruchs 1 genannten Mitteln gelöst.

Durch die kurze radiale Entfernung zwischen Lichtquelle und Glaszylinder werden kurze Belichtungszeiten ermöglicht. Das Belichtungsgut wird von ein und derselben Stelle im Gerät eingeführt und aus diesem wieder herausgebracht. Ferner wird das Belichtungsgut automatisch stets an der gleichen Stelle in der Vorrichtung positioniert, ohne daß es dazu besonderer Steuereinrichtungen bedürfte. Es ist ein einfacher Handantrieb möglich, bei dem lediglich der einarmige Hebel niedergedrückt und wieder freigegeben wird. Das Gerät ist sehr klein.

Der geringe Abstand zwischen Lichtquelle und Glaszylinder führt zu einem Durchmesser des Glaszylinders, der es überhaupt möglich macht, diesen maßzuschleifen, weil eine solche Qualitätsverbesserung bei Glaszylindern mit wirtschaftlich vernünftigem Aufwand nur etwa bis zu Durchmessergrößen von 50 mm möglich ist.

Der verhältnismäßig kleine Durchmesser des Glaszylinders und dem daraus folgenden, entsprechend kleinen Krümmungswinkel des um den Zylinder herumgelegten Kopiergutes bringt den zusätzlichen Vorteil mit sich, daß beim Kopieren von Filmen in Film-Jackets die nachteilige Wirkung der zwischen den Taschen des Jackets angeordneten Stege praktisch nicht mehr in Erscheinung tritt, weil der in den Taschen befindliche, zu kopierende Filmabschnitt zwischen den Stegen satt gegen die Kopierfolie gedrückt wird. Des weiteren wird beim Einziehen des Jackets in den Spalt zwischen Förderband und Glaszylinder, da die Stege des Jackets quer zur Einzugsrichtung verlaufen und nacheinander in den Spalt eintreten, infolge der Mangelwirkung von Förderband und Glaszylinder die in den Taschen des Jackets befindliche Luft vollständig nach der Seite hin herausgedrückt, so daß sich keine störenden Luftblasen bilden können.

Die Erfindung wird anhand des in der Zeichnung dargestellten Ausführungsbeispiels näher erläutert. In der Zeichnung zeigt

Fig. 1 die Vorrichtung in schematischer Darstellung, mit der von der Seite gesehenen Rollenführung, und

Fig. 2 die Vorrichtung von der Antriebsseite gesehen, ebenfalls in schematischer Darstellung.

In der Mittenachse A des Glaszylinders 1 ist die Kaltlichtröhre 2 angeordnet und innerhalb des Zylinders 1 in einem durch Pfeile abgegrenzten Bereich mittels einer Blende 3 abgedeckt. Das mit unterbrochenen Linien angedeutete Förderband 4 ist als endloses Band ausgebildet und wird mit Hilfe der Umführungsrolle 5 und der Antriebsrolle 6 mit einem Umfassungswinkel von etwa 280° um den Glaszylinder 1 herumgeführt. Dabei wird zwischen dem Glaszylinder 1 und der Antriebstrommel 6 der mit einem Doppelpfeil angedeutete Ein- und Ausführschlitz 7 für das mit dünnen unterbrochenen Linien angedeutete, aus Original und Belichtungsfolie bestehende Belichtungsgut B in die eingezeichnete Lage und aus dieser wieder herausgebracht. In Einzugsrichtung hinter dem Glaszylinder ist die Spannrolle 8 bei 9 in einem bei 10 angelenkten Paar einarmiger Hebel 11 gelagert. Am freien Ende dieses Hebelpaares 11 greift eine in einen Winkel 13 eingeschraubte Zugschraube 12 an, die ihrerseits unter dem Druck einer Feder 14 steht.

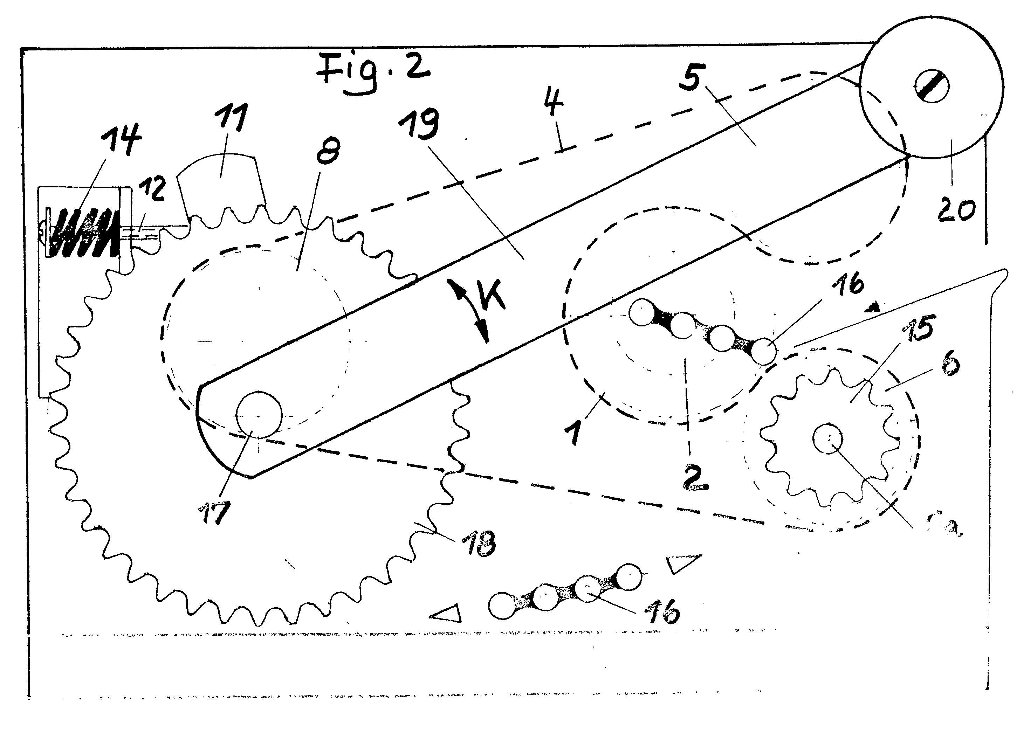

Wie aus Fig. 2 zu ersehen, erfolgt der Antrieb der Antriebsrolle 6 über ein auf der Rollenachse 6a sitzendes Kettenritzel 15. Die um dieses Ritzel herumgeführte Kette 16 ist als Endloskette um ein bei 17 ortsfest gelagertes Zahnrad 18 mit einer größeren Zähnezahl geführt. Auf der Achse 17 dieses Zahnrades sitzt ein einarmiger Hebel 19 mit einem Bedienknopf 20.

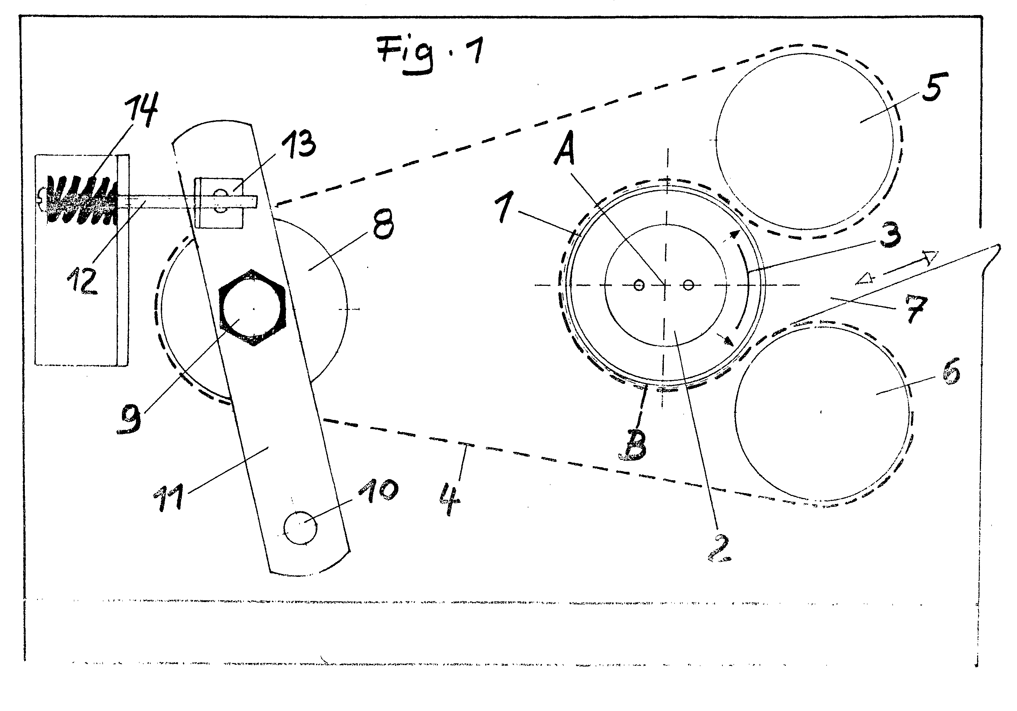

Das in den Ein- bzw. Ausführschlitz 7 (Fig. 1) eingelegte Belichtungsgut B wird durch einfaches Verschwenken des Hebels 19 (Fig. 2) von Hand in einer Richtung des Doppelpfeils K in die in Fig. 1 dargestellte Belichtungslage auf dem Zylinder 1 gebracht und nach durchgeführter Belichtung durch Zurückschwenken des Hebels 19 rückwärts aus dem Schlitz 7 wieder herausgebracht.

**Patentansprüche**

1. Vorrichtung zum Duplizieren von Mikrofilmen oder Mikrofilm-Jackets mit einer in der Mittenachse eines Glaszylinders angeordneten Lichtröhre und einem um den Glaszylinder herumgeführten, spannbaren, das zu kopierende Original und die zu belichtende Filmfolie gemeinsam unter Andrücken an die Außenwandung des Glaszylinders in Belichtungslage und aus dieser heraus fördernden Förderband, bei der dieses um eine in Einführrichtung des Belichtungsgutes hinter dem Glaszylinder angeordnete Spannrolle und um je eine vor dem Glaszylinder angeordnete Antriebs- bzw. Umführungsrolle geführt ist, dadurch gekennzeichnet, daß bei an sich bekannter Ausbildung der Lichtröhre als Kaltlichtröhre (2) der radiale Abstand zwischen dem Außenumfang dieser Kaltlichtröhre (2) und dem Außenumfang des Glaszylinders (1) kleiner als der Durchmesser der Kaltlichtröhre (2) bemessen und die äußere Wandfläche des Glaszylinders (10) maßgeschliffen sind, daß die Spannrolle (8) in einem Paar einarmiger Hebel (11) lagert, an deren freien Enden eine Stellfederanordnung (12, 13, 14) angreift, und daß der reversierbare Antrieb der Antriebsrolle (6) aus einem Zahnkettengetriebe besteht, das aus einem auf der Achse (6a) der Antriebsrolle (6) sitzenden Kettenritzel (15) und einem ortsfest gelagerten zweiten Zahnkettenrad (18) mit größerer Zähnezahl besteht.

2. Vorrichtung nach Anspruch 1, dadurch gekennzeichnet, daß auf der Achse des Zahnkettenrades (18) ein einarmiger Hebel (19) sitzt.

3. Vorrichtung nach Anspruch 1, dadurch gekennzeichnet, daß der Durchmesser des Glaszylinders (1) bei einem Durchmesser der Kaltlichtröhre von 21 mm etwa 50 mm beträgt.

4. Vorrichtung nach Anspruch 1, dadurch gekennzeichnet, daß auf die dem Glaszylinder (1) zugewandte Seite des Förderbandes (4) eine dünne Schicht eines elastischen Werkstoffes aufgebracht ist.

**Claims**

1. An apparatus for duplicating microfilms or microfilm jackets with a light valve arranged in the central axis of a glass cylinder an a conveyor belt which is guided round the glass cylinder, can be tightened and conveys the original to be copied and the sheet of film to be exposed together into the exposure position and out of it while pressing against the external wall of the glass cylinder, in which this conveyor belt is guided round a jockey roller arranged behind the glass cylinder in the feed direction of the exposed material and round a respective driving and return roller arranged in front of the glass cylinder, characterised in that, with a design known per se of the light valve as a cold light valve (2), the radial distance between the outer periphery of this cold light valve (2) and the outer periphery of the glass cylinder (1) is dimensioned smaller than the diameter of the cold light valve (2) and the external wall surface of the glass cylinder (10) is precision ground, in that the jockey roller (8) is mounted in a pair of single-armed levers (11) on whose free ends there acts an adjusting spring arrangement (12, 13, 14), and in that the reversible driving mechanism of the driving roller (6) consists of a sprocket mechanism comprising a chain-type pinion (15) resting on the axis (6a) of the driving roller (6) and a rigidly mounted second sprocket whell (18) with a larger number of teeth.

2. An apparatus according to Claim 1, characterised in that a single-armed lever (19) rests on the axis of the sprocket wheel (18).

3. An apparatus according to Claim 1, characterised in that the diameter of the glass cylinder (1) is approximately 50 mm when the diameter of the cold light valve is 21 mm.

4. An apparatus according to Claim 1, characterised in that a thin layer of an elastic material is applied to the side of the conveyor belt (4) facing the glass cylinder (1).

**Revendications**

1. Dispositif de duplication de microfilms ou de jackets de microfilms, pourvu d'un tube lumineux disposé dans l'axe d'un cylindre en verre et muni d'un ruban transporteur tendable qui passe autour du cylindre en verre et transporte l'original à copier en même temps que la pellicule à impressionner en les appliquant sur la paroi extérieure du cylindre en verre, jusque dans la position d'exposition à la lumière puis au-delà de cette position, ce ruban passant autour d'un rouleau tendeur disposé en aval du cylindre en verre dans la direction de l'introduction du microfilm et autour d'un rouleau moteur et d'un rouleau de renvoi disposés en amont du cylindre en verre, ce dispositif étant caractérisé en ce que lorsque le tube lumineux est constitué, de façon connue en soi, par un tube de lumière froide (2), la distance radiale entre le pourtour de ce tube et le pourtour du cylindre en verre (1) est plus petite que le diamètre du tube de lumière froide (2), en ce que la surface extérieure de la paroi du cylindre en verre (1) est polie à la dimension voulue, en ce que le rouleau tendeur (8) est monté dans une paire de leviers simples (11) dont les extrémités libres sont attaquées par un dispositif à ressort positionneur (12, 13, 14), et en ce que la commande réversible du rouleau moteur (6) est constituée par un réducteur à chaîne dentée qui se compose d'un pignon à chaîne (15) monté sur l'axe (6a) du rouleau moteur (6) et d'une deuxième roue à chaîne dentée (18) qui est montée en un point fixe et qui a un plus grand nombre de dents.

2. Dispositif selon la revendication 1, caractérisé en ce qu'un levier simple (19) est monté sur l'axe de la roue à chaîne dentée (18).

3. Dispositif selon la revendication 1, caractérisé en ce que le diamètre du cylindre en verre (1) est d'environ 50 mm lorsque le tube de lumière froide a un diamètre de 21 mm.

4. Dispositif selon la revendication 1, caractérisé en ce que sur la face du ruban transporteur (4) tournée vers le cylindre en verre (1) est appliquée une mince couche de matière élastique.

Fig. 1

Fig. 2